# EUROPÄISCHE PATENTSCHRIFT

(11) **EP 1 705 363 B1**
(45) Veröffentlichungstag und Bekanntmachung des Hinweises auf die Patenterteilung: **19.03.2008**
(21) Anmeldenummer: 05101699.6
(22) Anmeldetag: 04.03.2005
(51) Int. Cl.: F02M 35/10, F02F 7/00, F02M 61/14

(54) **Schutzrahmen**
Protection frame
Cadre protecteur

(43) Veröffentlichungstag der Anmeldung: 27.09.2006
(73) Patentinhaber: Ford Global Technologies, Inc., Dearborn, MI 48126 (US)
(72) Erfinder: Leuchter, Jochen, 52072, Aachen (DE)
(74) Vertreter: Drömer, Hans-Carsten

(56) Entgegenhaltungen:
- EP-A- 1 304 473
- EP-A- 1 441 122
- EP-A- 1 447 553
- PATENT ABSTRACTS OF JAPAN Bd. 1998, Nr. 14, 31. Dezember 1998 (1998-12-31) -& JP 10 252588 A (DAIHATSU MOTOR CO LTD), 22. September 1998 (1998-09-22)

## Beschreibung

Die Erfindung betrifft einen Verbrennungsmotor gemäß dem Oberbegriff des Anspruchs 1.

Die EP 1 441 122 A offenbart ein Schutzsystem für eine Kraftstoffversorgung eines Verbrennungsmotors. Der Verbrennungsmotor weist einen Zylinder auf, dem ein Einspritzsystem zugeordnet ist. Dem Zylinder ist ein Kraftableitungselement derart zugeordnet, dass Aufprallenergien auf ein Kraftfahrzeug von dem Kraftableitungselement aufgenommen und abgeleitet werden, so dass das Einspritzsystem crashgeschützt ist. Das Kraftableitungselement ist als separates Bauteil rahmenartig ausgestaltet.

Die Eingangs genannten-Verbrennungsmotoren sind bekannt. Zur Versorgung eines jeweiligen Brennraumes in dem jeweiligen Zylinder ist dem Brennraum jeweils zumindest ein Einspritzelement zugeordnet, das über ein Einspritzsystem mit dem notwendigen Kraftstoff versorgt wird. Das Einspritzsystem weist üblicherweise eine Verteilerleiste auf, die über ein zentrales Versorgungselement versorgt wird. Das Versorgungselement ist hierbei bevorzugt über Schnellverbinder mit der Verteilerleiste verbunden.

Bekannt ist, daß das Einspritzsystem mit seinem Versorgungselement als auch der Verteilerleiste seitlich von außen an einem Zylinderkopf oder an einem Ansaugrohr befestigt wird. Hierbei ist das Einspritzsystem häufig in einem Crash-Bereich eines Kraftfahrzeuges angeordnet und muß daher erhöhte Anforderungen bezüglich Festigkeit und Verformbarkeit erfüllen. Um diesen Anforderungen zu entsprechen, ist das Einspritzsystem äußerst kostenintensiv aus metallischen Bauteilen, wie z. B. Stahl oder Aluminium, zusammengesetzt. Die verwendeten Materialien besitzen zudem eine relativ große Wärmeleitfähigkeit, so daß es zu einer Kraftstoffdampfblasenbildung in dem Einspritzsystem kommen kann. Bekannt ist aber auch, daß das Einspritzsystem aus einem Kunststoff gebildet ist. Ein geeigneter Kunststoff weist vorteilhafterweise eine geringere Wärmeleitfähigkeit als Metall auf, so daß sich das Einspritzsystem weniger schnell aufheizt als bei einer Ausgestaltung aus Metall. Durch diese geringe Aufheizung wird vorteilhaft eine Kraftstoffdampfblasenbildung in dem Einspritzsystem verringert.

Im Falle eines Unfalles, insbesondere bei einem zu einer Fahrzeuglängsachse versetzten Aufprall auf das Fahrzeug kann das Einspritzsystem zerstört werden, so daß Kraftstoff auf heiße Bestandteile des Verbrennungsmotors geraten kann. Dabei kann sich der Kraftstoff entzünden, so daß das Fahrzeug ausbrennen kann. Dies ist insbesondere deswegen ärgerlich, da ein eventuell geringer Blechschaden doch zu einer kompletten Zerstörung des Fahrzeugs führen kann.

In der GB 2 333 324 A ist eine Kraftstoffeinspritzeinrichtung für eine aus Kurbelgehäuse, Zylinderkopf und Zylinderkopfhaube bestehende mehrzylindrige Brennkraftmaschine, mit in Aufnahmebohrungen im Zylinderkopf steckenden und in den Brennraum der zu versorgenden Brennkraftmaschine ragenden Krafteinspritzventilen sowie mit einer die Kraftstoffeinspritzventile verbindenden und durch ein Gehäuseteil abgeschirmten Verteilerleiste bekannt. Um die Kraftstoffeinspritzeinrichtung während eines Unfalles vor Zerstörung zu schützen, ist in der GB 2 333 324 A vorgesehen, daß das Gehäuseteil ein außen liegendes und der Zylinderkopfhaube benachbartes Abschirmteil ist. Weiter ist vorgesehen, daß die in dem Abschirmteil aufgenommene Verteilerleiste an den Endbereichen der Kraftstoffeinspritzventile angeschlossen ist, und daß die Längsseitenwand des Zylinderkopfes für einen aus der Aufnahmebohrung frei liegend herausragenden Teil jedes Kraftstoffeinspritzventiles abgasseitig nischenartige Einbuchtungen aufweist.

Als ein Hauptnachteil des in der GB 2 333 324 A ist anzusehen, daß das Abschirmteil in äußerst kostenintensiver und komplizierter Art und Weise dem Zylinderkopf zugeordnet ist. Nachteilig ist weiterhin, daß sich das Abschirmteil bei einem Crash verformen kann, und somit ersetzt werden muß. Weiterhin ist als Nachteil anzusehen, daß die Verteilerleiste komplett eingehaust ist und so beispielsweise zu Servicezwecken nicht zugänglich ist.

Der Erfindung liegt die Aufgabe zugrunde, einen Verbrennungsmotor der eingangs genannten Art mit einfachen Mitteln dahin gehend zu verbessern, daß das Einspritzsystem bei einem Crash vor Zerstörung geschützt wird, wobei das Mittel kostengünstig herstellbar sein soll und unkompliziert an dem Verbrennungsmotor angeordnet werden kann.

Erfindungsgemäß wird die Aufgabe durch einen Verbrennungsmotor mit den Merkmalen des Anspruchs 1 gelöst.

Günstig im Sinne der Erfindung ist, wenn das Kraftableitungselement Anbindungselemente zur Anbindung an den Zylinder aufweist. Hierbei wird eines der Anbindungselemente mit einem Ventildeckel verbunden, wobei das andere Anbindungselement benachbart zu einem Ansaugrohr an dem Zylinder unterhalb des Ventildeckels befestigt wird. Zur Anbindung der Anbindungselemente an dem Zylinder bzw. an dem Ventildeckel wird bevorzugt eine kraftformschlüssige Verbindung, insbesondere eine Schraubverbindung beispielsweise mittels Mittelbundschrauben verwendet.

Um ein leicht herstellbares und vom Gewicht gesehen leichtes Kraftableitungselement zur Verfügung zu stellen, ist vorteilhaft vorgesehen, daß das Kraftableitungselement als offener Rahmen ausgestaltet ist, wobei das Kraftableitungselement Rahmenstreben aufweist, von denen zumindest eine erste Rahmenstrebe mehrfach gebogen ist, und wobei zumindest eine zweite Rahmenstrebe als Versteifungsstrebe ausgestaltet ist.

Zweckmäßig im Sinne der Erfindung ist, wenn die erste Rahmenstrebe mit ihren freien Endbereichen jeweils mit einem Anbindungselement verbunden ist, wobei die Versteifungsstrebe mit einem Verbindungsende mit der Rahmenstrebe und mit einem zum Verbindungsende gegenüberliegenden Anbindungsende mit einem Anbindungselement verbunden ist, so daß an diesem Anbindungselement zum einen ein freier Endbereich der ersten Rahmenstrebe sowie das Anbindungsende der Versteifungsstrebe angeordnet ist. Zur Verbindung der jeweiligen Endbereiche der Rahmenstrebe sowie des Anbindungsendes an dem jeweils zugeordneten Anbindungselement wird bevorzugt eine stoffschlüssige Verbindung, insbesondere eine Schweißverbindung, gewählt.

Zur weiteren Gewichtsreduzierung des Kraftableitungselementes ist vorteilhaft vorgesehen, daß das Kraftableitungselement mit seinen Rahmenstreben bevorzugt aus Rohrelementen gebildet ist. In einer bevorzugten Ausgestaltung der Erfindung ist das Kraftableitungselement aus einem S355J2G3 (Werkstoffnummer 1.0570) nach DIN EN 10027-1 bzw. DIN EN 10027-2 gefertigt. Selbstverständlich können auch andere geeignete Werkstoffe verwendet werden, wobei aber auch denkbar ist, daß das Kraftableitungselement mit seinen Rahmenstreben aus Vollmaterial gebildet ist.

Damit wird ein Kraftableitungselement zur Verfügung gestellt, welches ohne Austausch oder Veränderungen von benachbarten Bauteilen einfach und kostengünstig mit dem Zylinder derart verbindbar ist, daß das Einspritzsystem während eines Unfalls aufgrund der Aufnahme und Ableitung der auftretenden Aufprallenergien geschützt ist, so daß das Einspritzsystem, insbesondere die Schnellverbinder, nicht zerstört werden. Das Kraftableitungselement nutzt in einfacher Weise die Steifigkeiten umgebender Bauteile aus, um die Aufprallenergien bzw. Kräfte aufzunehmen und abzuleiten und so die vorgenannten Aufprallenergien von dem Einspritzsystem, insbesondere von den Schnellverbindern, fern zu halten.

Von daher eignet sich das erfindungsgemäße Kraftableitungselement insbesondere zum Schutz des Einspritzsystems mit seiner Verteilerleiste bzw. Versorgungselement, so daß im Falle eines Unfalles das Einspritzsystem nicht zerstört wird, womit verhindert wird, daß Kraftstoff auf "heiße" Teile des Verbrennungsmotors gelangt, wo es sich andernfalls entzünden könnte.

Im montierten Zustand ist durch die vorteilhafte Ausgestaltung des Kraftableitungselementes sichergestellt, daß das Einspritzsystem, obwohl crashsicher, stets zugänglich ist, so daß ohne komplizierte Demontagearbeiten ein eventuell notwendiger Service an dem Einspritzsystem durchgeführt werden kann. Weiter ist besonders Vorteilhaft, daß sich bei einem Unfall, wenn überhaupt, lediglich das Kraftableitungselement verformt. Das erfindungsgemäße Kraftableitungselement muß dabei im verformten Zustand ausgetauscht und gegen ein neues ersetzt werden, weil nach Verformung der notwendige Sicherheitsabstand zu gefährdeten Bauteilen möglicherweise nicht mehr eingehalten wird. Der Austausch kann einfach durch Lösen der kraftformschlüssigen Verbindung erreicht werden.

Vorteilhafte Ausgestaltungen der Erfindung sind in den Unteransprüchen und der folgenden Figurenbeschreibung offenbart. Es zeigen:
- Fig. 1: eine Frontansicht auf einen Verbrennungsmotor mit einem Kraftableitungselement, und
- Fig. 2: das Kraftableitungselement als Einzelheit in einer perspektivischen Gesamtansicht.

In den unterschiedlichen Figuren sind gleiche Teile stets mit denselben Bezugszeichen versehen, so daß diese in der Regel auch nur einmal beschrieben werden.

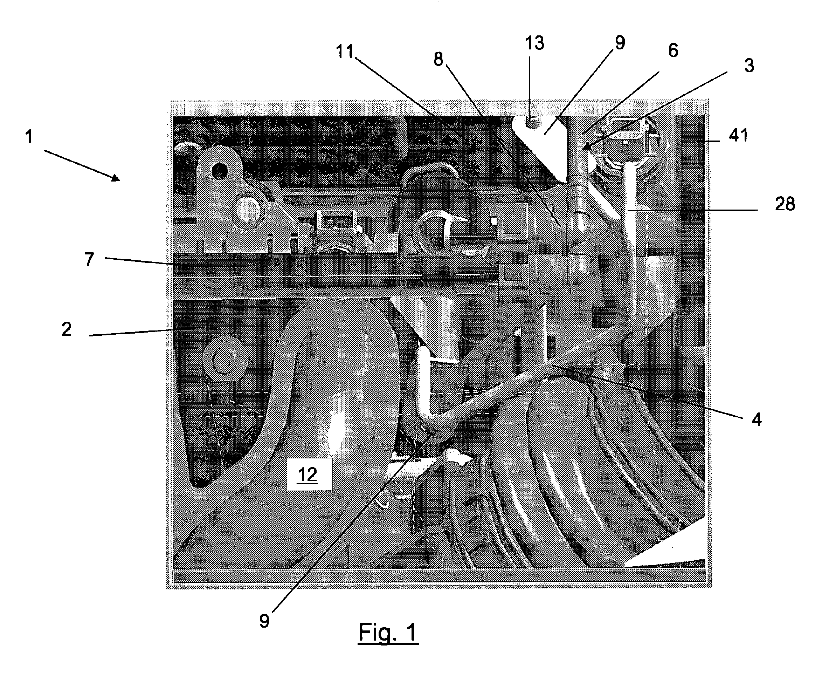

Figur 1 zeigt einen Ausschnitt eines Verbrennungsmotors 1 mit einem Zylinder 2, dem ein Einspritzsystem 3 zugeordnet ist. Der Verbrennungsmotor 1 weist in dem dargestellten Ausführungsbeispiel mehrere in Reihe angeordnete Zylinder 2 auf. Selbstverständlich kann der Verbrennungsmotor 1 aber auch als V-Motor ausgestaltet sein. Dem Zylinder 2 ist zumindest ein Kraftableitungselement 4 derart zugeordnet, daß Aufprallenergien bzw. andere Kräfte von dem Kraftableitungselement 4 aufgenommen und abgeleitet werden, so daß das Einspritzsystem 3 crashgeschützt ist. Das Kraftableitungselement 4 ist als separates Bauteil rahmenartig ausgestaltet.

Das Einspritzsystem 3 weist Versorgungsleitungen 6 auf, die mit einer Verteilerleiste 7 verbunden sind. Die Verbindung der Versorgungsleitung 6 mit der Verteilerleiste 7 wird in dem dargestellten Ausführungsbeispiel über Schnellverbinder 8 hergestellt. Das Einspritzsystem 3 weist zudem nicht dargestellte Einspritzventile auf, die einen jeweiligen Brennraum in dem Zylinder 2 mit Kraftstoff versorgen. Das Kraftableitungselement 4 weist Anbindungselemente 9 zur Anbindung des Kraftableitungselementes 4 an dem Zylinder 2 auf. In dem dargestellten Ausführungsbeispiel ist eines der Anbindungselemente 9 mit einem Ventildeckel 11 verbunden, wobei das andere Anbindungselement 9 unterhalb des Ventildeckels 11 mit dem Zylinder 2 verbunden ist. Bei der dargestellten bevorzugten Ausgestaltung ist das Kraftableitungselement 4 mit seinem, bezogen auf den Ventildeckel 11, unteren Anbindungselement 9 in der Nähe eines Ansaugrohres 12 angeordnet.

Das Kraftableitungselement 4 ist über seine Anbindungselemente 9 kraftformschlüssig zum einen mit dem Ventildeckel 11 und zum anderen mit dem Zylinder 2, vorzugsweise über Schraubverbindungen verbunden. Die kraftformschlüssige Verbindung ist an ohnehin vorhandenen Montageorten herstellbar. In dem dargestellten Ausführungsbeispiel wird einfach einer der vorhandenen Befestigungspunkte zur Befestigung von Ansaugrohr 12 und Ventildeckel 11 verwendet. Zur kraftformschlüssigen Verbindung können bevorzugt Mittelbundschrauben 13 verwendet werden. Selbstverständlich sind auch andere Schraubverbindungen denkbar. Mittelbundschrauben bieten jedoch die bevorzugte Lösung zur Montage von Ansaugrohr 12 und Ventildeckel 11, da dadurch nur jeweils ein Teil mit dem Zylinder bzw. dem Zylinderkopf verspannt werden muß und somit Setzerscheinungen in der Klemmkraft reduziert werden. Somit erfolgt bevorzugt lediglich ein Austausch einer vorhandenen Befestigungsschraube durch eine Mittelbundschraube 13, um das Kraftableitungselement 4 über seine Anbinddungselemente 9 mit dem Zylinder 2 zu verbinden.

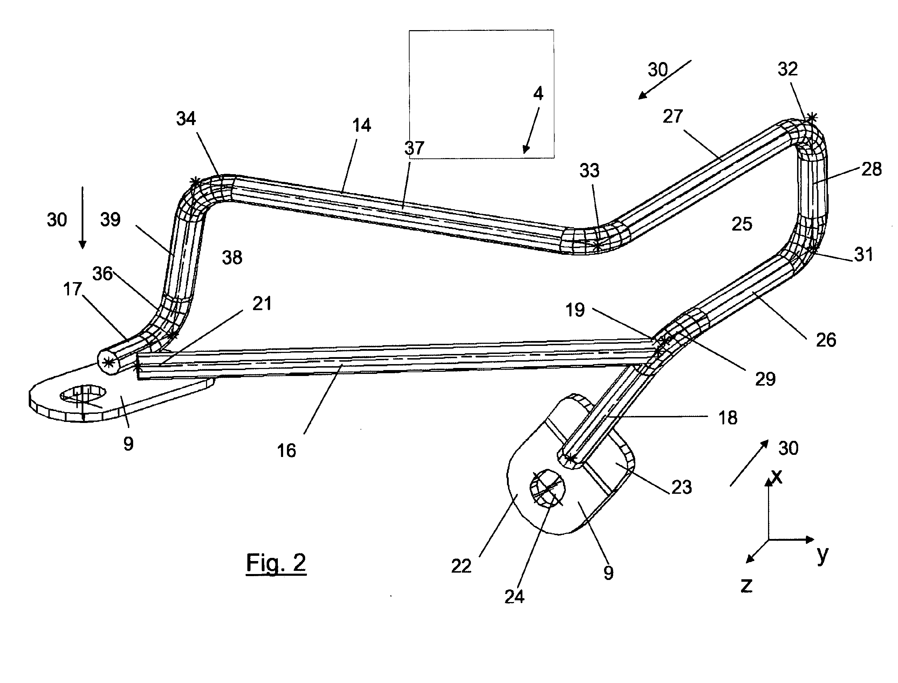

Das Kraftableitungselement 4 ist als offener Rahmen ausgestaltet und weist Rahmenstreben 14 und 16 auf, von denen zumindest eine erste Rahmenstrebe 14 mehrfach gebogen ist, und wobei zumindest eine zweite Rahmenstrebe als Versteifungsstrebe 16 ausgestaltet ist (Figur 2).

Die erste Rahmenstrebe 14 ist mit ihren freien Endbereichen 17, 18 jeweils mit einem Anbindungselement 9 verbunden. Die Versteifungsstrebe 16 ist mit einem Verbindungsende 19 mit der ersten Rahmenstrebe 14 und mit einem zum Verbindungsende 19 gegenüberliegenden Anbindungsende 21 mit einem der Anbindungselemente 9 verbunden. Somit ist eines der Anbindungselemente 9 zum einen mit der ersten Rahmenstrebe 14 als auch mit der Versteifungsstrebe 16 verbunden, wobei das andere Anbindungselement 9 lediglich mit der ersten Rahmenstrebe 14 verbunden ist.

Die Anbindungselemente 9 sind in dem dargestellten Ausführungsbeispiel als Lochplatte mit einem Kopfbereich 22 und einem Verbindungsbereich 23 ausgestaltet, wobei eines der Anbindungselemente 9 einen leicht abgebogenen Verbindungsbereich 23 aufweist, wobei das andere Anbindungselement 9 in dem bevorzugten Ausführungsbeispiel vollständig eben ausgestaltet ist. In dem Kopfbereich 22 ist jeweils ein Loch 24, bevorzugt ein Langloch zur Durchführung der gewählten Schraube, bevorzugt der Mittelbundschraube 13 angeordnet. Selbstverständlich können die beiden Anbindungselemente 9 je nach Einbausituation vollständig eben oder jeweils mit einem abgebogenen Verbindungsbereich 23 ausgeführt sein. Natürlich ist die Vorgabe welches Anbindungselement 9 mit einem abgebogenen Verbindungsbereich 23 ausgeführt ist an die vorhandene Einbausituation des Verbrennungsmotors anpaßbar.

Mit dem eben ausgestalteten Anbindungselement 9 ist sowohl das Anbindungsende 21 der Versteifungsstrebe 16 als auch der freie Endbereich 17 der ersten Rahmenstrebe 14 verbunden. Mit dem abgebogenen Verbindungsbereich 23 des Anbindungselementes 9 ist der zweite freie Endbereich 18 der ersten Rahmenstrebe 14 verbunden.

Der freie Endbereich 18 der ersten Rahmenstrebe 14 erstreckt sich geradlinig zu einem ersten Biegebereich 25, der im Wesentlichen U-förmig mit zwei U-Schenkeln 26 und 27 und einem Basisschenkel 28 ausgestaltet ist.

Ausgehend von dem Anbindungselement 9 mit seinem abgebogenen Verbindungsbereich 23 entlang der ersten Rahmenstrebe 14 in Richtung zum ebenen Anbindungselement 9 weist die Rahmenstrebe 14 in dem bevorzugten Ausführungsbeispiel 6 Biegungen 29 bis 36 auf, wobei die in Betrachtungsrichtung gesehen (Pfeile 30) erste Biegung 29 als Übergang von dem freien Endbereich 18 zum U-Schenkel 26 des ersten Biegebereiches 25 angeordnet ist. Die in Betrachtungsrichtung 30 folgenden Biegungen 31 bzw. 32 sind jeweils zwischen dem Basisschenkel 28 sowie dem vorgelagerten bzw. nachgelagerten U-Schenkel 26 bzw. 27 angeordnet. Der dem Basisschenkel 28 in Betrachtungsrichtung 30 gesehen nachgeordnete U-Schenkel 27 geht über die Biegung 33 in eine Querstrebe 37 über. Die Querstrebe 37 geht in einen zweiten Biegebereich 38 über, der mittels der beiden Biegungen 34 bzw. 36 in der perspektivischen Ansicht gesehen im Wesentlich S-förmig ausgestaltet ist, wobei die Biegung 36 in den freien Endbereich 17 der ersten Rahmenstrebe 14 übergeht.

Das Verbindungsende 19 der Versteifungsstrebe 16 ist im Bereich der in Betrachtungsrichtung 30 gesehen ersten Biegung 29 mit dem freien Endbereich 18 der ersten Rahmenstrebe 14 verbunden.

Der zweite Biegebereich 38 ist derart S-förmig ausgestaltet, daß der freie Endbereich 17 der Rahmenstrebe 14 in der perspektivischen Ansicht gesehen im Wesentlichen senkrecht von einem sich in X-Richtung erstreckenden S-Schenkel 39 abgebogen ist.

In Figur 1 ist das erfindungsgemäße Kraftableitungselement 4 in Einbautage dargestellt. Im Unterschied zu dem in Figur 2 beschriebenen Ausführungsbeispiel ist bei dem in Figur 1 dargestellten Ausführungsbeispiel das Anbindungselement 9 mit seinem abgebogenen Verbindungsbereich 23 sowohl mit dem freien Endbereich 17 der ersten Rahmenstrebe 14 als auch mit dem Anbindungsende 21 der Versteifungsstrebe 16 verbunden. Das ebene Anbindungselement 9 dagegen ist im Unterschied zu dem in Figur 2 dargestellten Ausführungsbeispiel mit dem freien Endbereich 18 der ersten Rahmenstrebe 14 verbunden.

Wie Figur 1 zeigt, ist das Kraftableitungselement 4 derart an dem Zylinder 2 angebunden, daß der erste Biegebereich 25 mit seinem Basisschenkel 28 etwa in Höhe des Einspritzsystemes 3, insbesondere der Versorgungsleitung 6, vorzugsweise der Schnellverbinder 8, angeordnet ist. In der in Figur 1 dargestellten Ausgestaltung ist das Kraftableitungselement 4 mit seinem ersten Biegebereich 24 zwischen den Versorgungsleitungen 6 und einem Luftfiltergehäuse 41 angeordnet.

Das erfindungsgemäße Kraftableitungselement 4 ist somit komplikationslos und leicht an dem Zylinder 2 montierbar und nutzt im Falle eines Unfalles die Steifigkeiten der Bauteile aus, an denen das Kraftableitungselement 4 befestigt ist. Somit verhindert das Kraftableitungselement 4 vorteilhaft eine Zerstörung des Einspritzsystems 3, insbesondere der Schnellverbinder 8, indem auftretende Aufprallenergien über das Kraftableitungselement abgeleitet und so von dem Einspritzsystem 3 ferngehalten werden. Deutlich erkennbar in Figur 1 ist, daß zur Montage des Kraftableitungselementes 4 keinerlei Teile ausgewechselt bzw. geändert werden müssen, sondern lediglich Montageorte zur Aufnahme der bevorzugten Mittelbundschraube 13 vorgesehen werden müssen. Bei dem dargestellten Ausführungsbeispiel ist lediglich der Austausch einer Ventildeckel- und einer Ansaugrohrbefestigungsschraube notwendig.

Das erfindungsgemäße Kraftableitungselement eignet sich somit bevorzugt als Schutzrahmen für das Einspritzsystem 3, welches im Falle eines Unfalles, insbesondere im Falle eines zu einer Fahrzeuglängsachse versetzten Aufpralles auf das Kraftfahrzeug, nicht zerstört werden kann, da die auftretenden Aufprallenergien von dem Kraftableitungselement 4 aufgenommen und abgeleitet und somit von dem Einspritzsystem 3 abgehalten werden. Natürlich ist die Ausgestaltung des Kraftableitungselementes 4 nicht auf das in den Figuren 1 und 2 beschriebene Ausführungsbeispiel beschränkt.

## Patentansprüche

1. Verbrennungsmotor mit zumindest einem Zylinder (2), dem ein Einspritzsystem (3) zugeordnet ist, wobei dem Zylinder (2) zumindest ein Kraftableitungselement (4) derart zugeordnet ist, daß Aufprallenergien auf ein Kraftfahrzeug von dem Kraftableitungselement (4) aufgenommen und abgeleitet werden, so daß das Einspritzsystem (3) crashgeschützt ist, wobei das Kraftableitungselement (4) als separates Bauteil rahmenartig ausgestaltet ist
**dadurch gekennzeichnet, daß**
das Kraftableitungselement (4) Rahmenstreben (14, 16) aufweist, von denen zumindest eine erste Rahmenstrebe (14) mehrfach gebogen ist, und wobei zumindest eine zweite Rahmenstrebe als Versteifungsstrebe (16) ausgestaltet ist.

2. Verbrennungsmotor nach Anspruch 1,
**dadurch gekennzeichnet, daß**
das Kraftableitungselement (4) Anbindungselemente (9) zur Anbindung an dem Zylinder (2) aufweist.

3. Verbrennungsmotor nach Anspruch 1 oder 2,
**dadurch gekennzeichnet, daß**
das Kraftableitungselement (4) als offener Rahmen ausgestaltet ist.

4. Verbrennungsmotor nach einem der vorhergehenden Ansprüche,
**dadurch gekennzeichnet, daß**
die erste Rahmenstrebe (14) mit ihren freien Endbereichen (17, 18) jeweils mit einem Anbindungselement (9) verbunden ist, wobei die Versteifungsstrebe (16) mit einem Verbindungsende (19) mit der Rahmenstrebe (14) und mit einem zum Verbindungsende (19) gegenüberliegenden Anbindungsende (21) mit einem Anbindungselement (9) verbunden ist.

5. Verbrennungsmotor nach einem der vorhergehenden Ansprüche,
**dadurch gekennzeichnet, daß**
das Kraftableitungselement (4) mit seinen Rahmenstreben (14, 16) aus Rohrelementen gebildet ist.

6. Verwendung eines Kraftableitungselementes (4) für einen Verbrennungsmotor (1) mit zumindest einem Zylinder (2), dem ein Einspritzsystem (3) zugeordnet ist, nach einem der vorhergehenden Ansprüche, wobei das Kraftableitungselement (4) Aufprallenergien aufnimmt und ableitet, so daß das Einspritzsystem (3) crashgeschützt ist, wobei das Kraftableitungselement (4) als separates Bauteil rahmenartig ausgestaltet ist.

## Claims

1. Internal combustion engine having at least one cylinder (2) which is assigned an injection system (3), with the cylinder (2) being assigned at least one force dissipation element (4) in such a way that collision energy imparted to a motor vehicle is absorbed and dissipated by the force dissipation element (4), so that the injection system (3) is protected in the event of a crash, with the force dissipation element (4) being embodied as a separate component in the manner of a frame,
**characterized in that**
the force dissipation element (4) has frame struts (14, 16), of which at least a first frame strut (14) is multiply bent, and with at least a second frame strut being embodied as a stiffening strut (16).

2. Internal combustion engine according to Claim 1,
**characterized in that**
the force dissipation element (4) has attachment elements (9) for attachment to the cylinder (2).

3. Internal combustion engine according to Claim 1 or 2,
**characterized in that**
the force dissipation element (4) is embodied as an open frame.

4. Internal combustion engine according to one of the preceding claims,
**characterized in that**
the first frame strut (14) is connected with its free end regions (17, 18) in each case to an attachment element (9), with the stiffening strut (16) being connected with a connecting end (19) to the frame strut (14) and with an attachment end (21), which is situated opposite the connecting end (19), to an attachment element (9).

5. Internal combustion engine according to one of the preceding claims,
**characterized in that**
the force dissipation element (4) with its frame struts (14, 16) is formed from tube elements.

6. Use of a force dissipation element (4) for an internal combustion engine (1), having at least one cylinder (2) which is assigned an injection system (3), according to one of the preceding claims, with the force dissipation element (4) absorbing and dissipating collision energy, so that the injection system (3) is protected in the event of a crash, with the force dissipation element (4) being embodied as a separate component in the manner of a frame.

## Revendications

1. Moteur à combustion interne comprenant au moins un cylindre (2), auquel est associé un système d'injection (3), au moins un élément de déflexion de force (4) étant associé au cylindre (2) de telle sorte que les énergies de collision appliquées à un véhicule automobile soient reçues par l'élément de déflexion de force (4) et déviées, de sorte que le système d'injection (3) soit protégé contre les collisions, l'élément de déflexion de force (4) étant configuré sous forme de composant séparé en forme de cadre,
**caractérisé en ce que**
l'élément de déflexion de force (4) présente des montants de cadre (14, 16) dont au moins un premier montant de cadre (14) est coudé plusieurs fois et au moins un deuxième montant de cadre est réalisé sous forme de montant de renforcement (16).

2. Moteur à combustion interne selon la revendication 1,
**caractérisé en ce que**
l'élément de déflexion de force (4) présente des éléments de liaison (9) pour la liaison au cylindre (2).

3. Moteur à combustion interne selon la revendication 1 ou 2,
**caractérisé en ce que**
l'élément de déflexion de force (4) est réalisé sous la forme d'un cadre ouvert.

4. Moteur à combustion interne selon l'une quelconque des revendications précédentes,
**caractérisé en ce que**
le premier montant de cadre (14) est connecté avec ses régions d'extrémité libres (17, 18) à chaque fois à un élément de liaison (9), le montant de renforcement (16) étant connecté par une extrémité de connection (19) au montant de cadre (14) et par une extrémité de liaison (21) opposée à l'extrémité de connection (19) à un élément de liaison (9).

5. Moteur à combustion interne selon l'une quelconque des revendications précédentes,
**caractérisé en ce que**
l'élément de déflexion de force (4) est formé avec ses montants de cadre (14, 16) à partir d'éléments tubulaires.

6. Utilisation d'un élément de déflexion de force (4) pour un moteur à combustion interne (1) comprenant au moins un cylindre (2) auquel est associé un système d'injection (3) selon l'une quelconque des revendications précédentes, l'élément de déflexion de force (4) recevant et déviant les énergies de collision de sorte que le système d'injection (3) soit protégé contre les collisions, l'élément de déflexion de force (4) étant réalisé sous la forme d'un composant séparé en forme de cadre.
